# FASCICULE DE BREVET EUROPEEN

(11) **EP 2 746 611 B1**
(45) Date de publication et mention de la délivrance du brevet: **03.07.2019**
(21) Numéro de dépôt: 13198507.9
(22) Date de dépôt: 19.12.2013
(51) Int. Cl.: F16D 55/24, B64C 25/36, B60B 25/00, F16D 65/02

(54) **Roue d'aéronef équipée de boulons-barrettes**
Rad eines Luftfahrzeugs, das mit Stegbolzen ausgestattet ist
An aircraft wheel fitted with dricekey-bolts

(30) Priorité: 20.12.2012 FR 1262407
(43) Date de publication de la demande: 25.06.2014
(73) Titulaire: Safran Landing Systems, 78140 Vélizy-Villacoublay (FR)
(72) Inventeur: De Crescenzo, Marie-Laure, 78140 VELIZY-VILLACOUBLAY (FR); Verdurmen, Christophe, 78140 VELIZY-VILLACOUBLAY (FR); Bussière, Jacques, 78140 VELIZY-VILLACOUBLAY (FR)
(74) Mandataire: Parzy, Benjamin Alain

(56) Documents cités:
- FR-A1- 2 616 712
- US-A- 4 585 096
- US-A- 4 944 370

## Description

L'invention concerne une roue d'aéronef équipée de boulons-barrettes.

### ARRIERE PLAN DE L'INVENTION

On connaît des roues d'aéronef comportant deux demi-roues assemblées au moyen de boulons répartis régulièrement pour serrer entre eux les voiles des demi-roues. Typiquement, un tel assemblage peut nécessiter un dizaine de boulons. A cet effet, les voiles des demi-roues sont percées d'orifices en regard aptes à recevoir les boulons. Par ailleurs, l'une des demi-roues reçoit sur la face interne de la jante des barrettes pour entraîner en rotation des disques rotors d'un frein à disques dont les disques s'étendent en service à l'intérieur de ladite demi-roue. Selon le cas, les barrettes sont venues de matière avec la demi-roue, ou sont rapportées sur celle-ci. Dans cette dernière situation, le voile de la demi-roue comporte des perçages pour recevoir une extrémité en forme de doigt de la barrette, des moyens de fixation étant par ailleurs prévus à l'autre extrémité de la barrette pour fixer celle-ci à la jante de la demi-roue.

Ainsi, le document US 4 944 370 A dévoile une roue d'aéronef comportant deux demi-roues assemblées entre elles au moyen de boulons d'assemblage serrant entre eux des voiles des demi-roues, chaque boulon comportant une vis avec une extrémité formant tête et une extrémité filetée pour recevoir un écrou, la roue étant également équipée de barrettes d'entraînement en rotation de disques de freins qui sont rapportées sur l'une des demi-roues.

### OBJET DE L'INVENTION

L'invention a pour objet de proposer une roue d'aéronef simplifiée.

### RESUME DE L'INVENTION

En vue de la réalisation de ce but, on propose une roue d'aéronef comportant deux demi-roues assemblées entre elles au moyen de boulons d'assemblage serrant entre eux des voiles des demi-roues, chaque boulon comportant une vis avec une extrémité formant tête et une extrémité filetée pour recevoir un écrou, la roue étant également équipée de barrettes d'entraînement en rotation de disques de freins qui sont rapportées sur l'une des demi-roues. Selon l'invention, les barrettes d'entraînement comportent une première extrémité qui est conformée pour coopérer avec la tête de la vis d'un des boulons d'assemblage de sorte que ladite première extrémité soit tenue et immobilisée lorsque la barrette est en place sur la roue.

Ainsi, il n'est plus besoin de prévoir des bossages ou des perçages dans le voile pour recevoir spécifiquement les premières extrémités de barrettes. La roue s'en trouve simplifiée.

### BREVE DESCRIPTION DES DESSINS

L'invention sera mieux comprise à la lumière de la description qui suit d'un mode particulier de réalisation de l'invention, en référence aux figures des dessins annexés, parmi lesquelles :
- la figure 1 est une vue en perspective d'une roue d'aéronef selon un mode particulier de réalisation de l'invention ;
- la figure 2 est une vue partielle en coupe passant par l'axe de rotation de la roue de la figure 1, et coupant l'un des boulons ;
- la figure 3 est une vue en perspective d'une roue d'aéronef selon un deuxième mode particulier de réalisation ;
- la figure 4 est une vue partielle en coupe passant par l'axe de rotation de la roue de la figure 3, et coupant l'un des boulons.

### DESCRIPTION DETAILLEE DE L'INVENTION

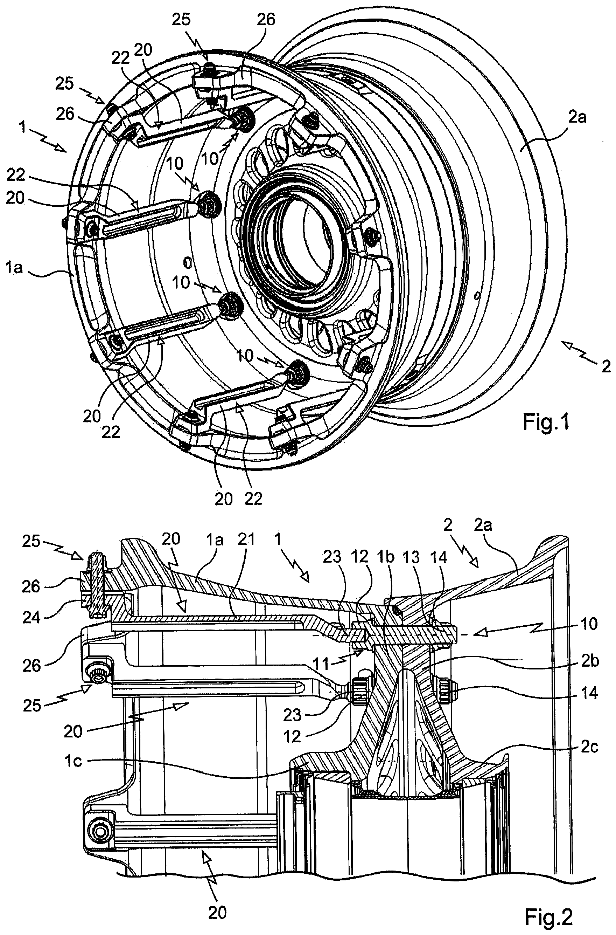

La roue illustrée aux figures 1 et 2 comprend de façon connue en soi deux demi-roues 1, 2 qui comportent chacun une partie de jante la, 2a, un voile 1b, 2b, ainsi qu'un demi-moyeu 1c, 2c. De façon connue en soi, les demi-roues sont rapprochées suivant une direction parallèle à un axe de rotation de la roue et comportent des portées de centrage pour assurer le bon positionnement relatif des demi-roues.

Les demi-roues sont maintenues en position par des boulons d'assemblage 10 comportant une vis 11 présentant une tête 12 et une extrémité filetée 13 pour recevoir un écrou 14.

Par ailleurs, la roue comporte des barrettes 20 rapportées qui comportent une partie courante 21 comportant deux flancs 22 pour coopérer avec des cavaliers de disques de freins. Chaque barrette 20 comporte une première extrémité 23, ici de forme cylindrique, qui est conformée pour être reçue dans un orifice central de la tête 12 de la vis 11 en regard, et une deuxième extrémité 24 qui est ici percée pour recevoir un boulon 25 de fixation de ladite extrémité à une extension 26 qui s'étend en saillie axiale de la demi-roue en regard.

Dans le mode de réalisation illustré, les boulons 10 sont vissés et serrés pour assembler les deux demi-roues, puis les barrettes 20 sont rapportées sur les têtes des vis des boulons et leur deuxième extrémité est fixée à la roue.

Ici, chaque boulon reçoit une barrette. Cependant, ceci n'est pas obligatoire. On pourra concevoir des roues comportant plus de boulons d'assemblage que de barrettes.

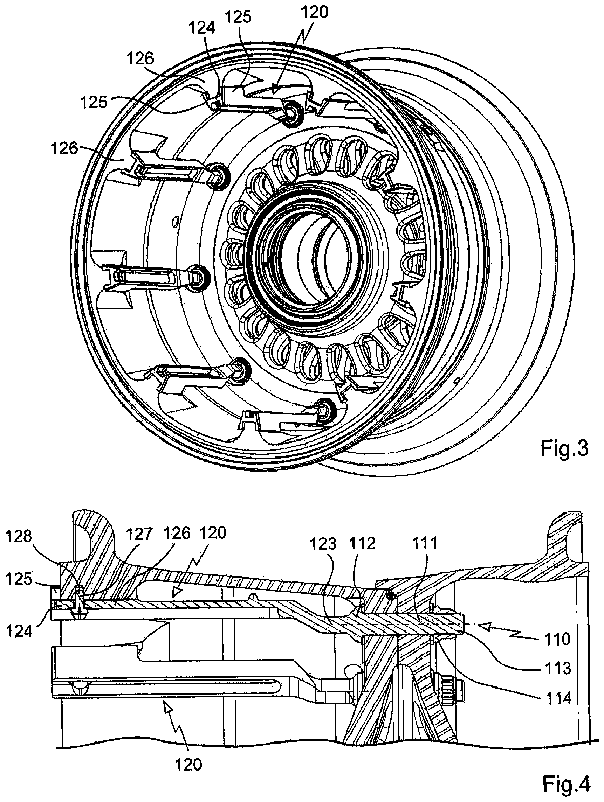

Dans le mode de réalisation illustré aux figures 3 et 4, sur lesquelles les références des éléments communs avec ceux du mode de réalisation précédent ont été augmentés d'une centaine, l'extrémité 123 de la barrette 120 est maintenant intégralement venue de matière avec la tête 112 de la vis 111, de sorte que la barrette 120 et le boulon 110 forment un ensemble monobloc.

On remarquera que la deuxième extrémité 124 présente deux projections 125 qui s'étendent vers la jante pour encadrer un brossage 126 s'étendant en saillie radiale de la jante. Une vis 127 permet d'immobiliser la deuxième extrémité 124 sur la jante en étant vissée dans un taraudage 128 du bossage 126.

L'invention n'est pas limitée à ce qui vient d'être décrit, mais au contraire englobe toute variante entrant dans le cadre défini par les revendications.

En particulier, bien que dans l'exemple illustré, l'extrémité de la barrette est engagée dans un orifice de la tête de la vis du boulon, on pourra bien sûr envisager l'inverse et faire pénétrer la tête de la vis dans un orifice de l'extrémité de la barrette, et plus généralement, prévoir des formes homologues de la tête de la vis et de l'extrémité de la barrette pour que celle-ci puisse être tenue par et immobilisée sur la tête de la vis.

Bien que les barrettes et les boulons sont ici illustrés comme deux éléments séparés, ce qui facilite le serrage des boulons, on pourra prévoir que la vis du boulon et la barrette soient venues de matière. Dans ce cas, l'extrémité de la barrette est immobilisée de manière définitive sur la tête de la vis du boulon.

Par ailleurs, bien que dans l'exemple illustré, les demi-roues comportent chacune un demi-moyeu, on pourra bien entendu envisager tout autre découpage, du moment que les demi-roues soient assemblées au moyens de boulons d'assemblage pouvant recevoir et immobiliser les extrémités des barrettes.

## Revendications

1. Roue d'aéronef comportant deux demi-roues (1, 2) assemblées entre elles au moyen de boulons d'assemblage (10 ; 110) serrant entre eux des voiles des demi-roues, chaque boulon comportant une vis (11 ; 111) avec une extrémité formant tête (12 ; 112) et une extrémité filetée (13 ; 113) pour recevoir un écrou (14, 114), la roue étant également équipée de barrettes (20 ; 120) d'entraînement en rotation de disques de freins qui sont rapportées sur l'une des demi-roues, **caractérisée en ce que** les barrettes d'entraînement comportent une première extrémité (23 ; 123) qui est conformée pour coopérer avec la tête de la vis d'un des boulons d'assemblage que ladite première extrémité soit tenue et immobilisée lorsque la barrette est en place sur la roue.

2. Roue selon la revendication 1, dans laquelle la première extrémité (23) est de forme cylindrique et pénètre dans un orifice central ménagé dans la tête (12) du boulon d'assemblage.

3. Roue selon la revendication 1, dans laquelle la barrette comporte une deuxième extrémité (24) percée pour recevoir un boulon de fixation (25) de ladite extrémité à une extension (26) s'étendant en saillie axiale de la demi-roue.

4. Roue selon la revendication 1, dans laquelle les vis (111) des boulons d'assemblage et les barrettes (120) sont venues de matière.

5. Roue selon la revendication 4, dans laquelle la première extrémité de la barrette est intégralement réalisée avec la tête de la vis.

6. Roue selon la revendication 4, dans laquelle les barrettes ont une deuxième extrémité portant deux projections (125) adaptées à encadrer un bossage de la jante de la demi-roue en regard.

## Patentansprüche

1. Luftfahrzeugrad, umfassend zwei Halbräder (1, 2), die mit Hilfe von Montagebolzen (10; 110) zusammengefügt sind, die zwischen sich Radscheiben der Halbräder einspannen, wobei jeder Bolzen eine Schraube (11; 111) mit einem einen Kopf (12; 112) bildenden Ende und einem Gewindeende (13; 113) zur Aufnahme einer Mutter (14, 114) umfasst, wobei das Rad ferner mit Drehantriebsleisten (20; 120) zum Drehantrieb von Bremsscheiben ausgestattet ist, wobei die Leisten an einem der Halbräder befestigt sind, **dadurch gekennzeichnet, dass** die Antriebsleisten ein erstes Ende (23; 123) umfassen, das so geformt ist, dass es mit dem Kopf der Schraube eines der Montagebolzen zusammenwirkt, damit das genannte erste Ende gehalten und immobilisiert wird, wenn die Leiste an dem Rad angebracht ist.

2. Rad nach Anspruch 1, bei dem das erste Ende (23) eine zylindrische Form hat und in eine zentrale Öffnung eindringt, die in dem Kopf (12) des Montagebolzens ausgebildet ist.

3. Rad nach Anspruch 1, bei dem die Leiste ein zweites Ende (24) hat, das durchbohrt ist, um einen Befestigungsbolzen (25) zur Befestigung des genannten Endes an einer Verlängerung (26) aufzunehmen, die von dem Halbrad axial vorsteht.

4. Rad nach Anspruch 1, bei dem die Schrauben (111) der Montagebolzen und die Leisten (120) einstückig sind.

5. Rad nach Anspruch 4, bei dem das erste Ende der Leiste integral mit dem Kopf der Schraube ausgebildet ist.

6. Rad nach Anspruch 4, bei dem die Leisten ein zweites Ende haben, das zwei Vorsprünge (125) trägt, die geeignet sind, eine gegenüberliegende Erhebung der Felge des Halbrades einzurahmen.

## Claims

1. An aircraft wheel comprising two half-wheels (1, 2) assembled together by means of bolt fasteners (10; 110) clamping together disks of the half-wheels, each bolt fastener comprising a bolt (11; 111) with an end forming a screw head (12; 112) and a threaded end (13; 113) for receiving a nut (14; 114), the wheel also being fitted with drive keys (20; 120) that are fitted to one of the half-wheels for driving brake disks in rotation, the wheel being **characterized in that** each drive key has a first end (23; 123) that is shaped to co-operate with the screw head of one of the bolts so that said first end is held and prevented from moving when the key is in place on the wheel.

2. A wheel according to claim 1, wherein the first end (23) is cylindrical in shape and penetrates into a central orifice formed in the screw head (12) of the bolt.

3. A wheel according to claim 1, wherein the key has a second end (24) that is pierced to receive a bolt (25) for fastening said end to an extension (26) projecting axially from the half-wheel.

4. A wheel according to claim 1, wherein the bolts (111) of the fastener bolts and the drive keys (120) are made integrally.

5. A wheel according to claim 4, wherein the first end of the drive key is formed integrally with the screw head of the bolt.

6. A wheel according to claim 4, wherein each key has a second end carrying two projections (125) adapted to be fitted astride a facing boss on the rim of the half-wheel.
